# EUROPEAN PATENT APPLICATION

(11) **EP 4 718 142 A1**
(43) Date of publication of application: **01.04.2026**
(21) Application number: 24203365.2
(22) Date of filing: 27.09.2024
(51) Int. Cl.: G02B 26/08, F21S 41/16, F21S 41/675

(54) **LIGHT DEVICE COMPRISING A LASER SOURCE**

(71) Applicant: Valeo Vision, 93012 Bobigny Cedex (FR)
(72) Inventor: RENAUD, Pierre, 93012 BOBIGNY CEDEX (FR); PRAT, Constantin, 93012 BOBIGNY CEDEX (FR); DA-CONCEICAO-SILVA, Kevin, 93012 BOBIGNY CEDEX (FR); EGAL, Fabrice, 93012 BOBIGNY CEDEX (FR); PALMIERI, Fabrizio, 93012 BOBIGNY CEDEX (FR)
(74) Representative: Valeo Visibility

(57) **Abstract**

Method for controlling a light device (1), the light device comprisinga laser source (2), in particular a laser source comprising at least one laser diode (2.1, 2.2, 2.3),a first module (5) configured to control power of the laser source (2),a micro-electro-mechanical system (3) comprising a mirror (3.1) configured to reflect a laser beam produced by the laser source (2), anda second module (6) configured to control the orientation of the mirror (3.1) of the micro-electro-Mechanical systems in order to project a given pattern (12) on a ground with the laser beam.

## Description

### Technical field of the invention

The invention relates to a method for controlling a light device comprising a laser source to avoid a concentration of light in an eye. The invention also relates to a light device comprising hardware and software means configured to perform such method.

### State of the prior art

We know vehicles comprising a light device equipped with a laser source. Such light device is dedicated to draw a picture, or "pattern", on the ground near the vehicle. Patterns projected with such light device might include pictograms or logos. Such pattern might help to communicate with car users or just produce an aesthetical effect.

Such light device generally comprises a laser source and a micro-electro-mechanical system (generally named as "MEMS") comprising a mirror configured to reflect a laser beam produced by the laser source. The orientation of the laser beam reflected by the mirror is then controlled by the micro-electro-mechanical system. An electronic control unit controls both the laser source and the micro-electro-mechanical system to project a predefined pattern.

Basically, there is two methods for controlling the micro-electro-mechanical system and the associated laser source. A first method consists of scanning completely a given area with the micro-electro-mechanical system and to power on the laser source only when the mirror is oriented toward a point of the area that has to be illuminated. The scanning might be for example a raster-type scanning or a Lissajous-type scanning. Such method has the advantage of allowing the projection of any pattern. On the other hand, the laser source is powered on only part of the time. Therefore, the projected pattern has a limited brightness.

A second method, named "vectorial control", consists of orientating the laser beam reflected by the mirror only on the points to be illuminated. The laser beam reflected by the mirror of the micro-electro-mechanical system follows the lines of the projected pattern. This second method has the advantage to keep the laser source always powered on during the projection of the pattern. Therefore, the projected pattern is brighter. On the other hand, this method is only available to draw patterns made of lines.

On another side, laser sources emit a directional beam, allowing for greater efficiency than a typical Lambertian LED. However, the brightness of a laser diode can make it dangerous if the beam is viewed directly, that is if the beam is directed in the eye. This danger is heavily limiting source power, and thus the brightness that can be reached on a projected pattern.

### Presentation of the invention

The aim of the invention is to provide a light device and a method for controlling a light device remedying the above drawbacks and improving the light devices and methods for controlling a light device known from the prior art.

More precisely, a first object of the invention is a solution for projecting a bright pattern that prevent any risk of injury for the eyes.

### Summary of the invention

The invention relates to a method for controlling a light device, the light device comprising:
- a laser source, in particular a laser source comprising at least one laser diode,
- a first module configured to control power of the laser source,
- a micro-electro-mechanical system comprising a mirror configured to reflect a laser beam produced by the laser source,
- a second module configured to control the orientation of the mirror of the micro-electro-Mechanical systems in order to project a given pattern on a ground with the laser beam,
the method comprising:
- receiving the pattern to be projected on the ground, the pattern containing a line,
- vectorial controlling of the micro-electro-mechanical system with the second module in order to project the pattern on the ground with the laser beam by following the line of the pattern, and
- controlling a power of the laser source by the first module and/or controlling an angular speed of the mirror by the second module in order to prevent the laser beam from having a high intensity on an area of the pattern .

The method may comprise
- analyzing shape of the line of the received pattern, and
- controlling the power of the laser source and/or the angular speed of the mirror depending on the shape of the line.

The analysis of the shape of the line may comprise:
- the estimation of the length of a portion of said line included inside a given area,
- the comparison of the estimated length with a threshold,
and, when the estimated length is higher than the threshold, reducing the power of the laser source and/or may increase the angular speed of the mirror.

The analysis of the shape of the line may comprise the detection of a straight portion followed by a curved portion in the line of the received pattern, and the vectorial controlling of the micro-electro-mechanical system may comprise:
- a first step of projection of the straight portion of the line performed with a first power of the laser source, and
- a second step of projection of the curved portion of the line performed with a second power of the laser source which is lower than the first power.

The first step may comprise a sub-step of transmitting a control signal to reduce the power of the laser source from the second module to the first module before projecting end of the straight portion.

The first step of projection of the straight portion of the line may be performed with a first angular speed of the mirror, and the second step of projection of the curved portion of the line may be performed with a second angular speed of the mirror which is lower than the first angular speed.

The analysis of the shape of the line may comprise the detection of a curved portion followed by a straight portion in the line of the received pattern, and the vectorial controlling of the micro-electro-mechanical system may comprise :
- a third step of projection of the curved portion of the line performed with a third power of the laser source, and
- a fourth step of projection of the straight portion of the line performed with a fourth power of the laser source which is higher than the third power.

The third step of projection of the curved portion of the line may be performed with a third angular speed of the mirror, and the fourth step of projection of the straight portion of the line may be performed with a fourth angular speed of the mirror which is higher than the third angular speed.

The invention also relates to a light device for an automotive vehicle, the light device comprising:
- a laser source, in particular comprising at least one laser diode,
- a first module configured to control power of the laser source,
- a micro-electro-mechanical system comprising a mirror configured to orientate a laser beam produced by the laser source,
- a second module configured to control the micro Electro-Mechanical systems in order to project a given pattern on a ground with the laser beam, and
- a control unit having a hardware and software means, wherein the hardware and software means corresponds to a memory, a first module, and a second module, the control unit is configured to perform the method as previously defined.

The light device may comprise an Application Specific Integrated Circuit configured to analyze the shape of the line of the received pattern and configured to automatically adapt the angular speed of the mirror depending on the shape of the line.

### Presentation of Figures

These objects, characteristics and advantages of the present invention will be explained in detail in the following description of a particular embodiment made on a non-limiting basis in relation to the attached figures among which:
The figure 1 is a schematic view of a light device according to one embodiment of the invention.
The figure 2 is a schematic view of a pattern to be projected on the ground with the light device.
The figure 3 is a schematic view of a pattern projected on the ground with a light device having a too high angular speed of a mirror included in the light device.
The figure 4 is a schematic view of laser beams reaching an eye.
The figure 5 is a schematic view of a portion of a pattern to be projected with the light device.
The figure 6 is a schematic view of a detail of the pattern of figure 2.

### Detailed description

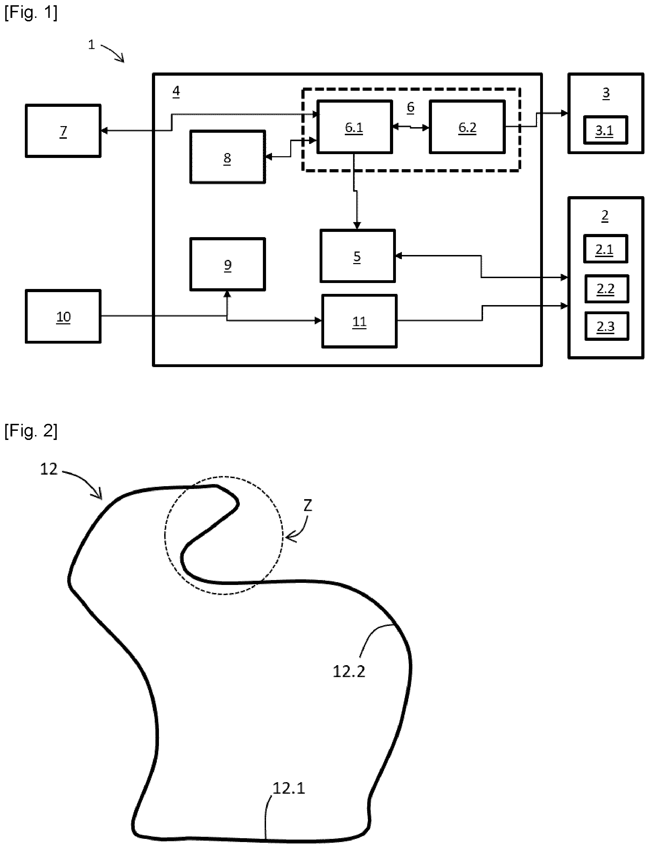

The figure 1 shows a light device 1 according to one embodiment of the invention. The light device 1 is intended for being integrated in an automotive vehicle. The light device 1 is configured to project a pattern on the ground beside the vehicle. For example, the light device 1 is configured to project a pictogram, a logo, one or several characters, or a word on the ground.

The light device comprises a laser source 2. The laser source 2 is configured to produce a laser beam having a variable intensity. The laser source 2 may comprise one or several electroluminescent diodes. For example, the laser source 2 comprises one red electroluminescent diode 2.1, one green electroluminescent diode 2.2, and one blue electroluminescent diode 2.3. Each diode may emit a directional beam oriented parallel to a same emission direction.

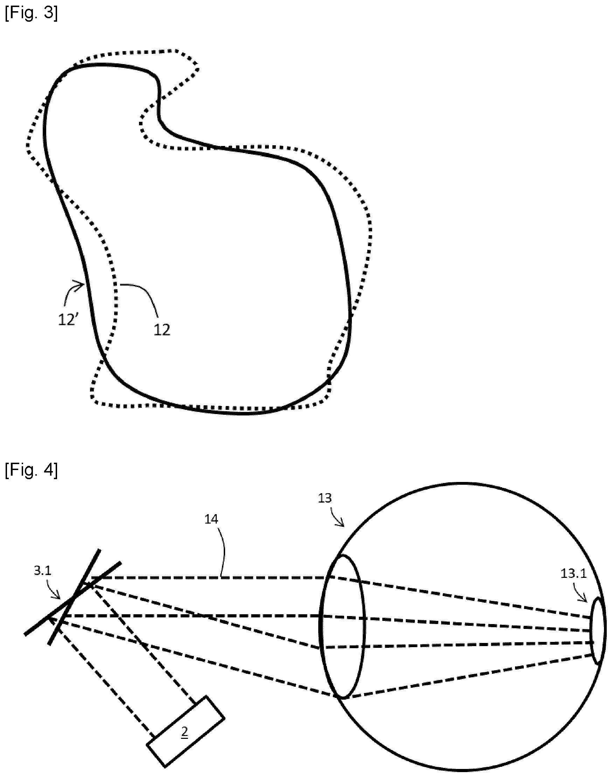

The light device 1 also comprises a micro-electro-mechanical system 3, or MEMS 3, comprising a mirror 3.1 configured to reflect a laser beam produced by the laser source 2. The MEMS 3 comprises miniaturized mechanical and electro-mechanical elements that are made using the techniques of microfabrication. The critical physical dimensions of the MEMS 3 can vary from well below one micron on the lower end of the dimensional spectrum, all the way to several millimeters. The MEMS 3 is configured to orientate the mirror 3.1 with high accuracy and high reactivity. The mirror 3.1 is placed on the trajectory or the beam emitted by the laser source 2. Depending on the orientation of the mirror 3.1, the beam is reflected in different directions than can be controlled. The extrema orientations of the mirror 3.1 define the size of an area on the ground where a pattern can be projected. On the figure 4, the mirror 3.1 is schematically represented with two different orientations.

The light device 1 also comprises an electronic control unit 4 configured to control the laser source 2 and the micro-electro-mechanical system 3.

The electronic control unit 4 comprises a first module 5 configured to control the laser source 2. The first module 5 may comprise a driver for the laser source 2. The first module 5 can manage and monitor the various diodes 2.1, 2.2 and 2.3. In particular, the first module 5 can control the power of the laser source 2, that is the quantity of light produced by the laser source 2. The first module 5 may receive and execute orders received from other modules to increase or to decrease the power of the laser source 2.

The electronic control unit 4 also comprises a second module 6 configured to control the micro-electro-mechanical system 3. The second module 6 may comprise a supervisor 6.1 for synchronization and/or for image management. The supervisor 6.1 may comprise a microcontroller or a programmable logical device, in particular a field-programmable gate array (FPGA). The supervisor may receive data from a network 7 of the vehicle 1. In particular, the supervisor may receive an image or a video sent over the network 7. The second module 6 may also comprise an ASIC controller 6.2 for managing and monitoring the MEMS 3. The supervisor 6.1 and the ASIC controller 6.2 are connected and able to exchange data. The supervisor 6.1 and the ASIC controller 6.2 could be merged in a single component. The first module 5 is connected to the second module 6, and notably to the supervisor 6.1

The electronic control unit 4 also comprises an internal memory 8. This memory is configured to store the image and/or the video received by the supervisor over the network. The pattern projected by the light device correspond to the stored image or video. As a remark, the pattern projected by the light device 1 might be a dynamic pattern, that is a moving pattern. The supervisor 6.1 is also connected to the internal memory 8.

Finally, the electronic control unit 4 may also comprise a power management module 9 connected a power supply 10 like a battery, and DC/DC converters 11 converting the voltage of the power supply 10 to a voltage adapted for the laser source 2.

The figure 2 shows an example of a pattern that can be projected with the light device 1. The pattern 12 comprises a line. The line comprises straight portions 12.1 and curved portions 12.2. In this example, the line is a closed line. As a remark, the distinction between a curved portion 12.2 and a straight portion 12.1 could be established based on the calculation of a derivative function of the line. The derivative function could then be compared to a given threshold. Alternatively, the line could be an open line, that is a line comprising two extremities. The pattern could also comprise several distinct lines.

To project the pattern 12 on the ground, the laser source 2 remains on, and the MEMS 3 is controlled in a vectorial manner, that is such that the laser beam reflected by the mirror follows the line of the pattern. The orientation of the mirror 3.1 is then continuously moving during the projection of the pattern 12. An angular speed of the mirror is defined as the instantaneous variation of the orientation of the mirror 3.1 over time. The angular speed of the mirror is directly correlated to the angular speed of the beam reflected by said mirror. A projection cycle is defined as the period required to project the complete pattern 12. Once a cycle is completed, a new cycle is immediately started as long as the projected pattern should be visible.

As explained with figure 4, the angular speed of the mirror 3.1 should not be too low. If the angular speed is too low, the laser beam 14 reflected by the mirror 3.1 could remain ON for long time in the same space area. If an eye 13 of a human intercept the laser beam 14 for a too long time, this could injure the retina 13.1 of the eye. For a given power of the laser source 2, it is therefore recommended that the laser beam cannot remain longer than 5µs focused on the retina 13.1, if the retina is placed at 100 mm of the mirror 3.1. Therefore, a higher angular speed of the mirror allows a higher value of flux, that is a higher power of the laser source 2.

On the other side and as explained with figure 3, the angular speed of the mirror 3.1 should not be too high. If the angular speed is too high, the orientation of the mirror 3.1 cannot be controlled with high accuracy and the pattern projected on the ground is deformed. The figure 3 shows the projection 12' of the theoretical pattern 12 that would be obtained with a too high angular speed of the mirror 3.1. The shape of the projection 12' is deformed in comparison to the theoretical pattern 12 and no more identifiable.

The electronic control unit 4 comprises hardware and software means configured to perform a method for controlling the light device 1 according to an embodiment of the invention. These hardware and software means could be integrated in the first module 5, or in the second module 6, or dispatched over several modules of the electronic control unit 4.

We are now going to describe this embodiment of a method for controlling the light device 1. This method allows to project a luminous pattern with high accuracy while protecting an eye that would accidentally receive directly the laser beam reflected by the mirror.

The method comprises a first stage of receiving a pattern 12 to be projected on a ground, the pattern containing a line. The pattern 12 can be predefined and stored in the internal memory 8 or in another memory of an electronic control unit of a vehicle. Alternatively, the pattern 12 might be selected or drawn by the user of the vehicle. For this purpose, a human-computer interface may be connected to the electronic control unit 4.

Then, the method comprises a second stage of vectorial controlling of the MEMS 3 with the second module 6 to project the pattern 12 on the ground with the laser beam following the line of the pattern. During this second stage, the power of the laser source 2 is controlled by the first module 5 and/or the angular speed of the mirror 3.1 is controlled by the second module 6 to avoid a concentration of light in an eye. When the angular speed decreases (for example to project a curved portion of the pattern without any deformation), the power of the laser source also decreases. When the angular speed increases, the power of the laser source also increases. In this manner, the laser beam reflected by the mirror may not injure the retina of an eye.

The vectorial controlling of the MEMS 3 may comprise a first step of projection of the straight portion of the line performed with a first power of the laser source, and then a second step of projection of the curved portion of the line performed with a second power of the laser source which is lower than the first power. The first step of projection of the straight portion of the line may be performed with a first angular speed of the mirror. The second step of projection of the curved portion of the line may be performed with a second angular speed of the mirror which is lower than the first angular speed.

Conversely, the vectorial controlling of the MEMS 3 may comprise a third step of projection of the curved portion of the line performed with a third power of the laser source, and then a fourth step of projection of the straight portion of the line performed with a fourth power of the laser source which is higher than the third power. The third step of projection of the curved portion of the line may be performed with a third angular speed of the mirror. The fourth step of projection of the straight portion of the line may be performed with a fourth angular speed of the mirror which is higher than the third angular speed.

The method may also comprise a stage of analyzing the shape of the line of the received pattern 12. Then, the power of the laser source 2 and/or the angular speed of the mirror 3.1 may be controlled depending on the shape of the line. In particular, the angular speed and the power of the laser source may be decreased when projecting a curved portion of the pattern 12. This enables a precise projection of the curved portion, without any approximation effect as described above and without danger for the eyes. The angular speed and the power of the laser source may be increased when projecting a straight portion of the pattern 12. The luminosity of the projected pattern may be lower in the curved portions than in the straight portion. Nevertheless, such a variation of luminosity is usually not disturbing. Users are generally able to recognize a pattern even when portions of the pattern are slightly less bright.

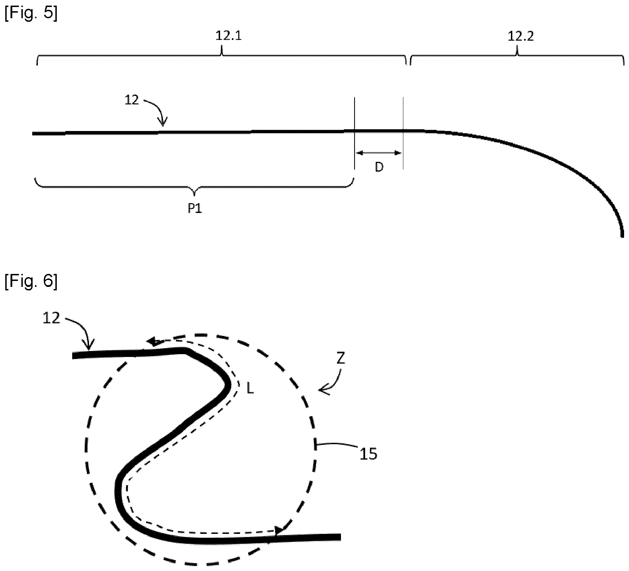

With reference to the figure 5, the first step may comprise a sub-step of sending an order from the second module 6 to the first module 5 to reduce the power of the laser source 2 before projecting the end of the straight portion. This order may be sent when the laser beam is at a distance D comprised between 5mm and 10mm of the end of the straight portion. Therefore, there is no risk that the pattern is projected with a high power of the laser source and a low angular speed at the same time. During a first period P1, the straight portion 2.1 is projected with the second module 6 sending the information that the projected pattern is a line. Therefore, the flux of the laser source 2 is limited only by the angular speed of the mirror. At the end of the first period P1, the second module 6 send the information to the first module 5 to reduce the power of the laser source 2 according to the shape of the curved portion 2.2. Therefore, the flux of the laser source 2 is limited only by the angular speed of the mirror.

The figure 6 shows a detail Z of the pattern of figure 2. The stage of analysis of the shape of the line may also comprise the estimation of the length L of a portion of said line included inside a given area 15. According to this example, the given area 15 is a circle. The size of the circle may correspond to the size of the human retina 13.1. That's to say, all laser beams that would illuminate the area 15 could also hit a human retina placed at 100mm of the mirror 3.1 at the same time. The length L multiplied by the power of the laser source and divided by the angular speed of the mirror is proportional to the quantity of energy that the retina could receive if the eye is placed at 100mm of the mirror and looks at the mirror. The method may then comprise the comparison of the estimated length L with a given threshold. If the estimated length L is higher than the threshold, the power of the laser source may be decreased, or the angular speed of the mirror may be increased in order to protect the eye. Nevertheless, as explained before, the angular speed of the mirror cannot be increased indefinitely without altering the shape of the pattern. Then, if the angular speed of the mirror cannot be increased, the power of the laser source is automatically decreased. As a remark, the comparison of the estimated length L with a given threshold allows to identify a dangerous zone on the pattern, that is a zone where the line present a concentration of meanders or convolutions. Advantageously, the estimation of the length L of a portion of said line included inside a given area 15 may be repeated for all points of the line of the pattern, in order to detect all dangerous zone of the pattern. As consequence, the brightness of the projected pattern will be lower in such a dangerous zone to avoid any injury of the eye. In case, the vehicle is equipped with an human-computer interface allowing a user to draw himself a pattern, a warning message could be sent to the user to inform about the lower luminosity of this zone of the drawing.

Finaly, thanks to the invention, we obtain a method to control a light device that allows to project a luminous pattern with high accuracy, while protecting an eye that would accidentally receive directly the laser beam reflected by the mirror.

## Claims

1. Method for controlling a light device (1), the light device comprising:
- a laser source (2), in particular a laser source comprising at least one laser diode (2.1, 2.2, 2.3),
- a first module (5) configured to control power of the laser source (2),
- a micro-electro-mechanical system (3) comprising a mirror (3.1) configured to reflect a laser beam produced by the laser source (2),
- a second module (6) configured to control the orientation of the mirror (3.1) of the micro-electro-Mechanical systems in order to project a given pattern (12) on a ground with the laser beam,
the method comprising:
- receiving the pattern (12) to be projected on the ground, the pattern containing a line,
- vectorial controlling of the micro-electro-mechanical system (3) with the second module (6) in order to project the pattern on the ground with the laser beam by following the line of the pattern, and
- controlling a power of the laser source by the first module (5) and/or controlling an angular speed of the mirror by the second module (6) in order to prevent the laser beam from having a high intensity on an area of the pattern.

2. Method according to the previous claim, **characterized in that** it comprises: analyzing shape of the line of the received pattern (12), and controlling the power of the laser source (2) and/or the angular speed of the mirror (3.1) depending on the shape of the line.

3. Method according to the previous claim, **characterized in that** the analysis of the shape of the line comprises:
- the estimation of the length (L) of a portion of said line included inside a given area (15),
- the comparison of the estimated length with a threshold,
and **in that**, when the estimated length is higher than the threshold, reducing the power of the laser source (2) and/or increase the angular speed of the mirror (3.1).

4. Method according to one of the claims 2 or 3, **characterized in that** the
analysis of the shape of the line comprises detection of a straight portion (12.1) followed by a curved portion (12.2) in the line of the received pattern (12),
and **in that** the vectorial controlling of the micro-electro-mechanical system comprises:
- a first step of projection of the straight portion (12.1) of the line performed with a first power of the laser source (3), and
- a second step of projection of the curved portion (12.2) of the line performed with a second power of the laser source (3) which is lower than the first power.

5. Method according to the previous claim, **characterized in that** the first step comprises a sub-step of transmitting a control signal to reduce the power of the laser source (3) from the second module (6) to the first module (5) before projecting end of the straight portion (12.1).

6. Method according to the claim 3 or 4, **characterized in that**:
- the first step of projection of the straight portion (12.1) of the line is performed with a first angular speed of the mirror ( 3.1), and
- the second step of projection of the curved portion (12.2) of the line is performed with a second angular speed of the mirror (3.1) which is lower than the first angular speed.

7. Method according to one of the claims 2 to 6, **characterized in that** the
analysis of the shape of the line comprises: detection of a curved portion (12.2) followed by a straight portion (12.1) in the line of the received pattern (12),
and **in that** the vectorial controlling of the micro-electro-mechanical system comprises:
- a third step of projection of the curved portion (12.2) of the line performed with a third power of the laser source (2), and
- a fourth step of projection of the straight portion (12.1) of the line performed with a fourth power of the laser source (2) which is higher than the third power.

8. Method according to the previous claim, **characterized in that**:
- the third step of projection of the curved portion (12.2) of the line is performed with a third angular speed of the mirror (3.1), and
- the fourth step of projection of the straight portion (12.1) of the line is performed with a fourth angular speed of the mirror (3.1) which is higher than the third angular speed.

9. A Light device (1) for an automotive vehicle, the light device comprising:
- a laser source (2), in particular comprising at least one laser diode (2.1, 2.2, 2.3),
- a first module (5) configured to control power of the laser source (2),
- a micro-electro-mechanical system (3) comprising a mirror (3.1) configured to orientate a laser beam produced by the laser source (2),
- a second module (6) configured to control the micro Electro-Mechanical systems (3) in order to project a given pattern (12) on a ground with the laser beam, and
- a control unit (4) having a hardware and software means (5, 6, 8), wherein the hardware and software means corresponds to a memory (8), a first module (5), and a second module (6), the control unit (4) is configured to perform the method according one of the previous claims.

10. The light device (1) according to the previous claim, **characterized in that** it comprises an Application Specific Integrated Circuit (ASIC) configured to analyze the shape of the line of the received pattern, and configured to automatically adapt the angular speed of the mirror (3.1) depending on the shape of the line.
